(19) Europäisches Patentamt
European Patent Office
Office européen des brevets

(11) **EP 1 430 489 B1**

(12) **EUROPÄISCHE PATENTSCHRIFT**

(45) Veröffentlichungstag und Bekanntmachung des Hinweises auf die Patenterteilung:
**11.11.2009 Patentblatt 2009/46**

(21) Anmeldenummer: **02776719.3**

(22) Anmeldetag: **25.09.2002**

(51) Int Cl.:
***H01C 1/14*** *(2006.01)*   ***H01C 17/28*** *(2006.01)*

(86) Internationale Anmeldenummer:
**PCT/DE2002/003618**

(87) Internationale Veröffentlichungsnummer:
**WO 2003/030187 (10.04.2003 Gazette 2003/15)**

(54) **ELEKTROKERAMISCHES BAUELEMENT MIT MEHREREN KONTAKTFLÄCHEN**

ELECTROCERAMIC COMPONENT COMPRISING A PLURALITY OF CONTACT SURFACES

COMPOSANT ELECTROCERAMIQUE COMPORTANT PLUSIEURS SURFACES DE CONTACT

(84) Benannte Vertragsstaaten:
**DE FR GB**

(30) Priorität: **28.09.2001 DE 10147898**

(43) Veröffentlichungstag der Anmeldung:
**23.06.2004 Patentblatt 2004/26**

(73) Patentinhaber: **EPCOS AG**
**81669 München (DE)**

(72) Erfinder:
• **GREIER, Günther**
**A-8042 Graz-St. Peter (AT)**
• **ENGEL, Günter**
**A-8430 Leibnitz (AT)**
• **KOFLER, Renate**
**A-8010 Graz (AT)**
• **PECINA, Axel**
**A-8530 Deutschlandsberg (AT)**

• **KRUMPHALS, Robert**
**A-8530 Deutschlandsberg (AT)**

(74) Vertreter: **Epping - Hermann - Fischer**
**Patentanwaltsgesellschaft mbH**
**Ridlerstrasse 55**
**80339 München (DE)**

(56) Entgegenhaltungen:
WO-A-02/071825    DE-A- 19 827 574
DE-A- 19 946 196    DE-C- 4 213 629

• **PATENT ABSTRACTS OF JAPAN vol. 1999, no. 11, 30. September 1999 (1999-09-30) & JP 11 150005 A (MARCON ELECTRON CO LTD), 2. Juni 1999 (1999-06-02)**
• **PATENT ABSTRACTS OF JAPAN vol. 014, no. 467 (E-0989), 11. Oktober 1990 (1990-10-11) & JP 02 189903 A (MURATA MFG CO LTD), 25. Juli 1990 (1990-07-25)**

**Beschreibung**

Viele elektrokeramische Bauelemente werden üblicherweise in Oberflächenmontage auf Platinen gelötet. Die Möglichkeit der oberflächenmontage (SMD-Fähigkeit) kann dadurch erreicht werden, daß Kontaktflächen auf den keramischen Bauelementen angebracht werden. Gleiches gilt für die Herstellung bedrahteter Bauelemente. Auch hier müssen zunächst Kontaktflächen auf den keramischen Bauelementen aufgebracht werden. Auf diesen Kontaktflächen werden dann Drähte, zum Beispiel in einem Lötverfahren aufgebracht.

Die Miniaturisierung von elektrischen Bauelementen, beispielsweise von Varistoren als Überspannungsschutzelementen in Mobilfunktelefonen erfordern die Produktion von zunehmend kleineren Mehrfachbauelementen, die mehrere elektrisch leitende Kontaktflächen auf ihrer Oberfläche aufweisen. Da diese Bauelemente üblicherweise sehr kleine Dimensionen aufweisen, beispielsweise Kantenlängen von etwa 1 mm, sind die Kontaktflächen sehr eng nebeneinander auf der Oberfläche des elektrischen Bauelements angeordnet, so daß es zunehmend schwieriger wird, die Kontaktflächen elektrisch voneinander zu isolieren. Dieses Problem wird weiter dadurch verschärft, daß oftmals mehrlagige Kontaktflächen, üblicherweise mittels galvanischer Prozesse aufgebracht werden.

Die Haftfestigkeit der galvanisch aufgebrachten Kontaktflächen auf dem keramischen Bauelement spielt dabei eine wesentliche Rolle. Auf einer unbehandelten Keramikoberfläche ist sie in der Regel so gering, daß sie den Anforderungen der Praxis nicht genügt. Deswegen wird in der Regel mittels eines Leitklebers oder einer Leitpaste eine Grundkontaktierung aufgebracht und dann eingebrannt. Auf dieses Grundkontaktierung können dann mittels galvanischer Prozesse weitere Metallisierungsschichten abgeschieden werden.

Da einige Elektrokeramiken, zum Beispiel Varistorkeramiken auf der Basis von Zinkoxid nur einen geringen ohmschen Widerstand aufweisen, kann sich während des Galvanikprozesses eine Metallschicht vollständig oder.teilweise auf dem Keramikkörper abscheiden, so daß Oberflächenleckströme zwischen benachbarten Kontaktflächen auftreten können. Häufig werden die Keramikkörper auch von den üblicherweise sauren Galvanikbädern angegriffen und geätzt. Dies kann zum Beispiel im Falle einer Varistorkeramik zur Veränderung der Korngrenzen und damit zu einer Veränderung der elektrischen Eigenschaften des Bauelements führen.

Die Galvanikflüssigkeit kann bei Eindringen in den keramischen Grundkörper auch dessen elektrische Eigenschaften verändern, so daß auch Bauelemente, die zwischen benachbarten Kontaktflächen nicht überplattiert wurden, einen erhöhten Oberflächenleckstrom aufweisen.

Aus der Patentschrift US 6,159,768 A ist ein Verfahren zur Herstellung von Mehrfachbauelementen bekannt, bei dem auf dem gesinterten Keramikkörper zwischen benachbarten Kontaktflächen eine Glaspaste aufgetragen und eingebrannt wird. Der Nachteil dieses Verfahrens besteht darin, daß die Glaspaste und die Grundkontaktierung der Kontaktflächen üblicherweise in einem ähnlichen Temperaturbereich bei etwa 800°C eingebrannt werden, so daß es zu Reaktionen zwischen der Glaspaste und der Leitpaste der Grundkontaktierung kommen kann. Diese Reaktion kann die weitere galvanische Abscheidung von weiteren Kontaktflächen verschlechtern. Weiterhin kann die Reaktion zwischen der Glaspaste und der Grundkontaktierung zu erhöhten Oberflächenleckströmen zwischen den benachbarten Kontaktflächen führen. Darüber hinaus werden in dem in der US-Patentschrift offenbarten Verfahren nur die Bereiche zwischen den Kontaktflächen mit der Glaspaste versehen, so daß die anderen, nicht mit der Passivierungsschicht versehenen Bereiche des keramischen Grundkörpers nach wie vor durch die sauren Galvanikbäder geätzt werden können.

Aus der Patentschrift DE 196 34 498 C2 sind des weiteren keramische Bauelemente bekannt, auf denen Schutzschichten aus Bariumtitanat, Siliziumdioxid, Aluminiumoxid oder Glas angeordnet sind. Diese Schutzschichten haben den Nachteil, daß sie mit Keramiken, die zum Beispiel für Varistoren verwendet werden, nicht gemeinsam sinterbar sind und daher die Herstellung solcher Bauelemente aufwendig ist.

DE 19946196 beschreibt ein Bauelement mit einem dessen Funktion definierenden Grundkörper mit Kontaktflächen an einander gegenüberliegenden Stirnseiten, wobei die von den Kontaktflächen freien Flächen des Grundkörpers mit einer Schutzumhüllung aus Spinellkeramik versehen sind. Die nicht vorveröffentlichte WO 02/071825 offenbart ein Verfahren, bei dem auf einen Grundkörper eine Schutzschicht aus Spinellkeramik aufgebracht und gesintert wird und auschliessend Kontaktflächen galvanisch aufgebracht werden.

Der Erfindung liegt deshalb die Aufgabe zugrunde, ein keramisches Bauelement mit einer verbesserten Schutz- oder Passivierungsschicht anzugeben, das die genannten Nachteile vermeidet.

Die Aufgabe wird durch ein Bauelement nach Anspruch 1 gelöst. Vorteilhafte Ausgestaltungen des erfindungsgemäßen Bauelements sind Gegenstand weiterer Ansprüche. Verfahren zur Herstellung sind in den Ansprüchen 9 und 15 definiert.

Die Erfindung beschreibt ein elektrisches Bauelement mit einem die Funktion des Bauelements definierenden keramischen Grundkörper. Auf zwei sich gegenüberliegenden Flächen des Grundkörpers sind wenigstens vier Kontaktflächen angeordnet, wobei sich zwischen den Kontaktflächen eine erste keramische Schutzschicht befindet, die so beschaffen ist, daß sie bei einer höheren Temperatur sinterbar ist, als die Kontaktflächen. Auf zumindest zwei weiteren sich jeweils gegenüberliegenden Flächen des keramischen Grundkörpers ist eine zweite keramische Schutzschicht aufgebracht. Somit ist es möglich, daß entweder nur auf zwei oder auf allen vier von der ersten keramischen Schutzschicht freien Flächen die zweite keramische Schutzschicht aufgebracht ist. Um die Herstellung des erfindungsgemäßen Bauelements zu vereinfachen, sind der keramische Grundkörper, die erste und die zweite keramische Schutzschicht gemeinsam sinterbar. Auf diese Art und Weise ist es möglich, den gesamten Grundkörper mit darauf angeordneten Schutzschichten in einem Sinterschritt zu brennen.

Ein Vorteil des erfindungsgemäßen Bauelements gegenüber dem Stand der Technik besteht darin, daß die erste keramische Schutzschicht bei höheren Temperaturen gesintert wird, als die Kontaktflächen, so daß beim Sintern der Kontaktflächen Reaktionen zwischen den Kontaktflächen und der ersten keramischen Schutzschicht vermieden werden können. Aus diesem Grund zeigt das erfindungsgemäße Bauelement mit einer ungefähren Länge von 1mm und einer Breite von etwa 1,2 mm wesentlich geringere Oberflächenleckströme, die kleiner als etwa 3 $\mu$A bei 36 V sind. Bei herkömmlichen Bauelementen, bei denen es zu Reaktionen zwischen den keramischen Schutzschichten und den Kontaktflächen kommt, sind Leckströme im Bereich von etwa 30 bis 300 $\mu$A bei 36 V Spannung gemessen worden.

Ein weiterer Vorteil des erfindungsgemäßen Bauelements gegenüber dem Stand der Technik besteht darin, daß auf zumindest zwei weiteren sich gegenüberliegenden Flächen des keramischen Grundkörpers eine zweite keramische Schutzschicht aufgebracht ist. Diese verhindert vorteilhafterweise ein Überplattieren des keramischen Grundkörpers beim zum Beispiel galvanischen Aufbringen weiterer Metallisierungsschichten auf die bereits bestehenden Kontaktflächen.

Durch die zweite keramische Schutzschicht kann auch zuverlässig der Zutritt von Bestandteilen des üblicherweise sauren Galvanikbades zu den von ihr bedeckten Teilen der Oberfläche des keramischen Grundkörpers verhindert werden. Dadurch kann zuverlässig verhindert werden, daß von der keramischen Schutzschicht bedeckte Bereiche des keramischen Grundkörpers von dem Galvanikbad geätzt werden.

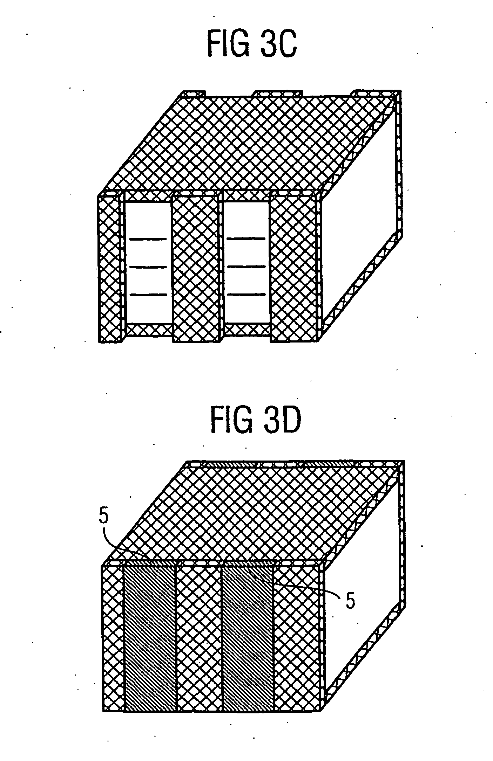

Oberflächenbereiche des keramischen Grundkörpers, die weiter von den Kontaktflächen oder anderen funktionellen Bereichen des Bauelements entfernt sind, müssen nicht notwendigerweise vor den sauren Galvanikbädern geschützt werden. Aus diesem Grunde ist es beispielsweise möglich, bei einem Bauelement, auf dessen sich gegenüberliegenden Seitenflächen die Kontaktflächen angeordnet sind, nur die Mantelflächen mit einer zweiten keramischen Schutzschicht zu bedecken. Die Stirnflächen dieses Bauelements können von Schutzschichten frei bleiben (siehe auch Fig. 3D).

In einer weiteren vorteilhaften Ausgestaltung können im keramischen Grundkörper elektrisch leitende Elektrodenschichten angeordnet sein, die durch Teile des keramischen Grundkörpers voneinander abgetrennt sind. Jede der Kontaktflächen kann jeweils mit mehreren Elektrodenschichten elektrisch leitend verbunden sein und so ein Elektrodenbündel bilden. Diese Ausgestaltung hat den Vorteil, daß durch eine geeignete Gestaltung der elektrisch leitenden Elektrodenschichten der ohmsche Widerstand des keramischen Bauelements flexibel an den jeweils vorgesehenen Einsatzbereich des Bauelements angepaßt werden kann.

Zur Vereinfachung der Herstellung des erfindungsgemäßen Bauelements sind vorteilhafterweise die erste und zweite keramische Schutzschicht auch aus dem gleichen Keramikmaterial ausgebildet. Vorteilhafterweise sind die erste und/oder zweite keramische Schutzschicht hochohmig. Dadurch kann für eine wirksame Isolation zwischen den Kontaktflächen gesorgt werden, so daß Kurzschlüsse in den Schutzschichten vermieden werden können. Darüber hinaus hat ein hoher elektrischer Widerstand der Schutzschichten den Vorteil, daß das galvanisches Abscheiden von Metallschichten auf anderen als den für die Kontaktflächen vorgesehenen Flächen des Grundkörpers vermieden werden kann.

Die erste und/oder zweite keramische Schutzschicht können beispielsweise eine Blei-Lanthan-Zirkon-Titanatkeramik (PLZT-Keramik) der Formel (Pb,La)(Zr,Ti)03 umfassen. Dabei handelt es sich um polykristalline Keramiken mit Perowskit-Struktur, die durch die allgemeine Formel $ABO_3$ gekennzeichnet sind. Die A-Plätze können dabei von Pb besetzt sein, das teilweise von La ersetzt werden kann, wobei die B-Plätze von Zr und/oder Ti besetzt sein können. Vorteilhafterweise setzen sich diese Keramiken aus PbO mit einem ungefähren Anteil von 50-80 Gewichts%, $ZrO_2$ mit etwa 20-50 Gewichts%, $Ti_2O_3$ mit etwa 10-40 Gewichts% und $LaO_3$ mit etwa 0-20 Gewichts% zusammen.

Diese Keramiken haben den Vorteil, daß sie gemeinsam mit vielen keramischen Grundkörpern gesintert werden können. Möglich ist auch der Einsatz von Spinellkeramiken der allgemeinen Zusammensetzung $AB_2O_4$, wobei A ein zwei- und B ein drei- oder vierwertiges Metall ist, beispielsweise $ZnMn_2O_4$.

Möglich ist auch der Einsatz einer weiteren Perowskitverbindung der folgenden allgemeinen Formel

$$M^{II}_x M^{III}_{1-x} Ti^{IV}_{x+y} Co^{II}_y Co^{III}_{1-x-2y} O_3,$$

bei dem das zweiwertige Metall MII entweder Strontium oder Barium und das dreiwertige Metall MIII ein Element der seltenen Erden ist, bei dem gilt:

$$0 \leq x < 0{,}85; \quad 0 < y < (1-x)/2 \quad \text{und} \quad (x+y) \leq 1.$$

Diese Materialien haben den Vorteil, daß sie ebenfalls gemeinsam mit dem keramischen Grundkörper gesintert werden können. Darüber hinaus weisen sie alle hohe ohmsche Widerstände auf und verändern während des Sinterns nicht die elektrischen Eigenschaften des keramischen Bauelements.

Der keramische Grundkörper kann eine Vielzahl von Elektrokeramiken, beispielsweise eine Varistorkeramik auf der Basis von Zinkoxid, eine Kondensatorkeramik oder eine magnetische Keramik umfassen.

Im folgenden soll das erfindungsgemäße Bauelement, sowie verschiedene Verfahren zu seiner Herstellung anhand von Ausführungsbeispielen und Figuren näher erläutert werden.

Figur 1 — zeigt ein erfindungsgemäßes Bauelement mit einer ersten und zweiten keramischen Schutzschicht vor dem Aufbringen der Kontaktflächen in perspektivischer Ansicht.

Figur 2A — zeigt ein erfindungsgemäßes Bauelement nach dem Aufbringen der Kontaktflächen in der Aufsicht.

Figur 2B — zeigt einen Querschnitt durch die in Figur 2A mit A bezeichnete Ebene zwischen zwei Kontaktflächen.

Figur 2C — zeigt einen Querschnitt durch einen Bereich zwischen zwei mit der ersten Schutzschicht versehenen Bereichen des Grundkörpers der in Figur 2A mit B bezeichnet ist.

Figuren 3A bis 3D — zeigen die Herstellung eines erfindungsgemäßen Bauelements wobei die Kontaktflächen mittels eines Leitklebers oder einer Leitpaste aufgebracht werden.

Figuren 4A bis 4D — zeigen die Herstellung eines erfindungsgemäßen Bauelements, wobei die Kontaktflächen direkt galvanisch auf dem keramischen Grundkörper aufgebracht werden.

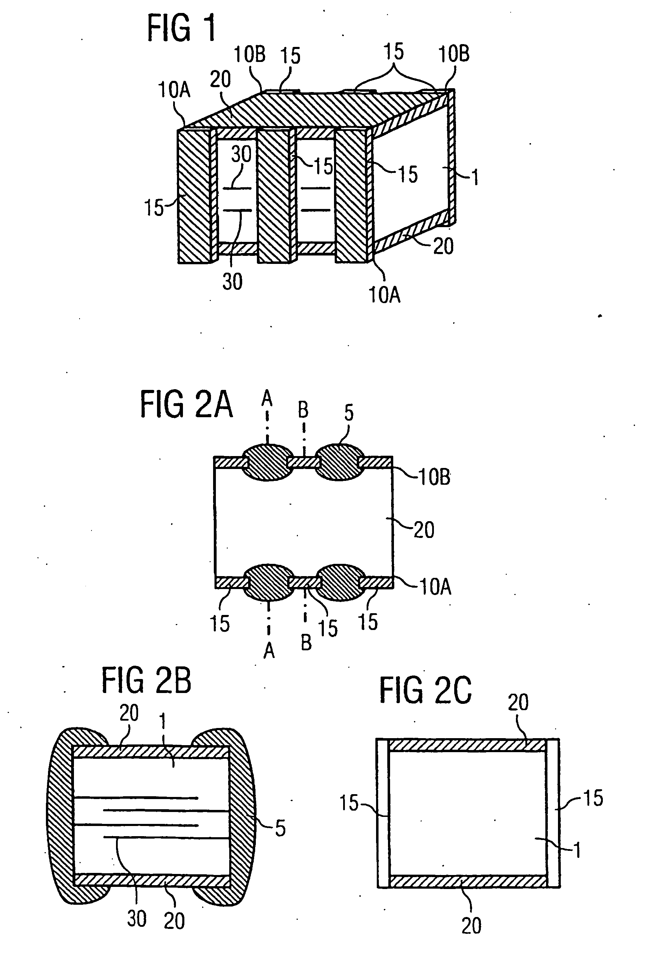

Figur 1 zeigt ein erfindungsgemäßes Bauelement vor dem Aufbringen der Kontaktflächen 5. Zu sehen sind eine erste keramische Schutzschicht 15, die die Bereiche der beiden Flächen 10A und 10B bedeckt, die nicht von den Kontaktflächen 5 bedeckt werden sollen. Weiterhin befinden sich auf den Mantelflächen des Bauelements die zweite keramische Schutzschicht 20. In dem keramischen Grundkörper sind Elektrodenschichten 30 angeordnet, von denen in der Figur zwei angedeutet sind.

In Figur 2A ist eine Aufsicht auf ein erfindungsgemäßes Bauelement nach dem Aufbringen der Kontaktflächen 5 zu sehen. Es stehen sich jeweils zwei Kontaktflächen 5 gegenüber, wobei allerdings auch mehr Kontaktflächen bzw. Kontaktflächenpaare auf dem Bauelement angeordnet sein können. Zwischen den Kontaktflächen 5 befindet sich auf den sich gegenüberliegenden Flächen 10A und 10B des keramischen Grundkörpers die erste keramische Schutzschicht 15. Die Mantelflächen des Bauelements sind jeweils von der zweiten keramischen Schutzschicht 20 bedeckt. Mit A und B sind zwei Schnittebenen bezeichnet, die im Fall von A durch zwei sich gegenüberliegende Kontaktflächen 5 verlaufen und bei B durch zwei sich gegenüberliegende erste keramische Schutzschichten zwischen den Kontaktflächen 5 verlaufen.

In Figur 2B ist ein Querschnitt durch die in Fig. 2A mit A bezeichnete Ebene zu sehen. Jede Kontaktfläche 5 ist elektrisch leitend mit Elektrodenschichten 30 verbunden, so daß jeweils ein Elektrodenbündel gebildet wird. Die Mantelflächen, die Flächen, deren Kanten in Kontakt mit den Kontaktflächen stehen, sind in diesem Bereich des Bauelements von der zweiten keramischen Schutzschicht 20 bedeckt.

Figur 2C zeigt einen Querschnitt durch die in Fig. 2A mit B bezeichnete Ebene. Zu sehen ist, daß in diesem Bereich der keramische Grundkörper 1 vollständig von der ersten keramischen Schutzschicht 15 und der zweiten keramischen Schutzschicht 20 bedeckt ist.

Das erfindungsgemäße Bauelement läßt sich beispielsweise mittels eines zweistufigen Verfahrens herstellen. In einem ersten Verfahrensschritt A) wird auf sich gegenüberliegenden Flächen 10A und 10B eines keramischen Grundkörpers 1, auf denen später die Kontaktflächen 5 angeordnet werden sollen, eine erste keramische Schutzschicht 15 auf den nicht mit den Kontaktflächen zu bedeckenden Bereichen aufgebracht und auf zumindest zwei weiteren sich gegenüberliegenden Flächen 25A und 25B des keramischen Grundkörpers eine zweite keramische Schutzschicht aufgebracht und anschließend der keramische Grundkörper gesintert. In einem zweiten Verfahrensschritt B) können dann die Kontaktflächen 5 auf dem keramischen Grundkörper zwischen den ersten keramischen Schutzschichten erzeugt werden und bei einer niedrigeren Temperatur als die erste Schutzschicht im ersten Verfahrensschritt A) gesintert werden.

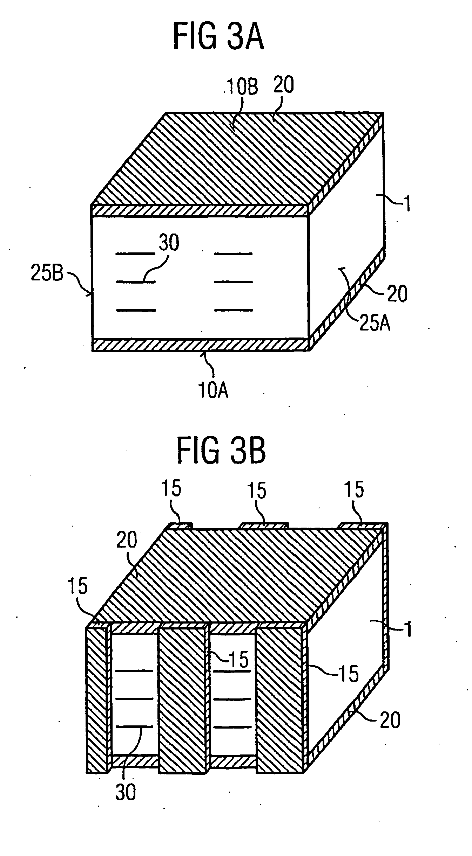

Figur 3A zeigt die beispielhafte Herstellung eines keramischen Grundkörpers 1 im Verfahrensschritt A) durch Verstapeln von keramischen Grünfolien, wobei zwischen den Folien elektrisch leitende Elektrodenschichten 30 angeordnet werden können. Die Elektrodenschichten können auch beispielsweise mittels eines Druckverfahrens auf die keramischen Grünfolien aufgebracht werden. Beim Verstapeln der keramischen Grünfolien verwendet man als oberste und unterste Grünfolie dann vorteilhafterweise die zweite keramische Schutzschicht 20, wie in Figur 3A gezeigt.

Anschließend läßt sich immer noch im Verfahrensschritt A), wie in Figur 3B gezeigt, auf die Seitenflächen des keramischen Grundkörpers die erste keramische Schutzschicht 15 zwischen den Bereichen aufbringen, die später von den Kontaktflächen 5 bedeckt werden sollen. Die erste keramische Schutzschicht läßt sich beispielsweise mittels eines Druckverfahrens, beispielsweise Siebdruckverfahrens, aufbringen. Es ist dabei möglich, zwei sich gegenüberliegende Flächen des keramischen Grundkörpers 1 dann nicht mit einer keramischen Schutzschicht zu bedecken bzw. freizulassen, wenn diese Flächen weit genug von funktionellen Bereichen des Bauelements, wie beispielsweise den Kontaktflächen 5 oder den Elektrodenschichten 30, entfernt sind. In Figur 3C ist der keramische Grundkörper mit darauf befindlichen keramischen Schutzschichten nach dem Sintern im Verfahrensschritt A) zu sehen. Das Sintern läßt sich beispielsweise für etwa 24 Stunden durch Aufheizen des Keramikkörpers auf eine Temperatur von > 1000°C bewerkstelligen.

In Figur 3D ist das erfindungsgemäße Bauelement nach der Erzeugung der Kontaktflächen 5 zu sehen. Die Kontaktflächen können beispielsweise in Form einer Leitpaste auf der Basis von Silber, Palladium oder Platin oder eines Leitklebers auf dem keramischen Grundkörper aufgebracht werden. Anschließend werden diese bei einer niedrigeren Temperatur eingebrannt, als das Sintern im Verfahrensschritt A) erfolgte. Beispielsweise wird die aufgebrachte Leitpaste bei etwa 200°C getrocknet und anschließend für etwa 1 bis 2 Stunden bei ungefähr 800°C eingebrannt.

Anschließend können mittels herkömmlicher galvanischer Schritte weitere Metallisierungsschichten auf den Kontaktflächen abgeschieden werden. So können beispielsweise eine Nikkelbarriereschicht und abschließend eine Zinnschicht, die die Löteigenschaften des Bauelements bestimmt, auf den Kontaktflächen 5 aufgebracht werden.

Mittels einer geeigneten mechanischen und chemischen Vorbehandlung der mit den Kontaktflächen 5 zu versehenden Bereichen des keramischen Grundkörpers, lassen sich die Kontaktflächen 5 auch direkt galvanisch auf dem keramischen Grundkörper abscheiden. Bei unbehandelten Keramikoberflächen ist die Haftfestigkeit von galvanisch aufgebrachten Kontaktflächen normalerweise zu gering, um den Anforderungen an die Bauelemente während des Betriebs gerecht zu werden.

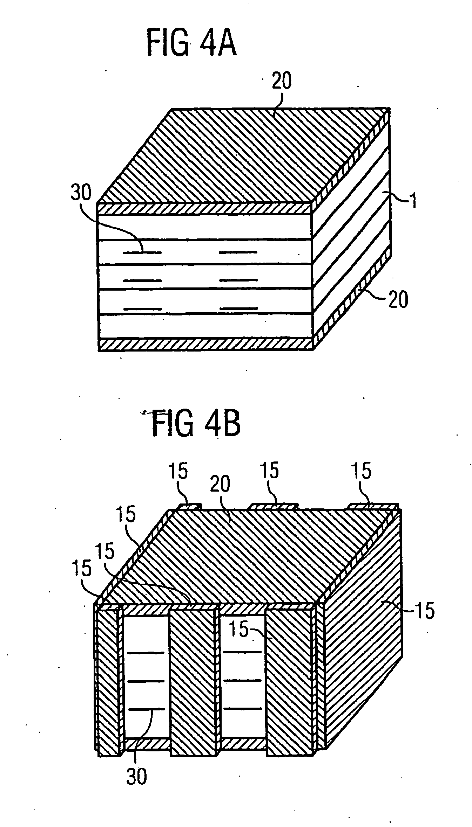

Fig. 4A: In Analogie zu dem vorher erläuterten Verfahren wird auch bei diesem Verfahren in einem Verfahrensschritt A1) auf sich gegenüberliegenden Flächen eines keramischen Grundkörpers, auf denen die Kontaktflächen angeordnet werden sollen, eine erste keramische Schutzschicht auf den nicht mit den Kontaktflächen zu bedeckenden Bereichen erzeugt. Um sicherzustellen, daß nur die mit den Kontaktflächen zu versehenden Bereiche des keramischen Grundkörpers chemisch und mechanisch aktiviert werden, wird ebenfalls im Verfahrensschritt A1) auf alle vier weiteren sich gegenüberliegenden Flächen des keramischen Grundkörpers, auf denen keine Kontaktflächen angeordnet werden sollen, jeweils eine zweite keramische Schutzschicht 20 aufgebracht. Bei diesem Verfahren ist es also vorteilhaft, alle nicht zu galvanisierenden Bereiche mit einer Schutzschicht zu bedecken. Anschließend wird auch hier im Verfahrensschritt A1) der keramische Grundkörper mit den keramischen Schutzschichten gemeinsam gesintert. Figur 4B zeigt da Bauelement in diesem Stadium.

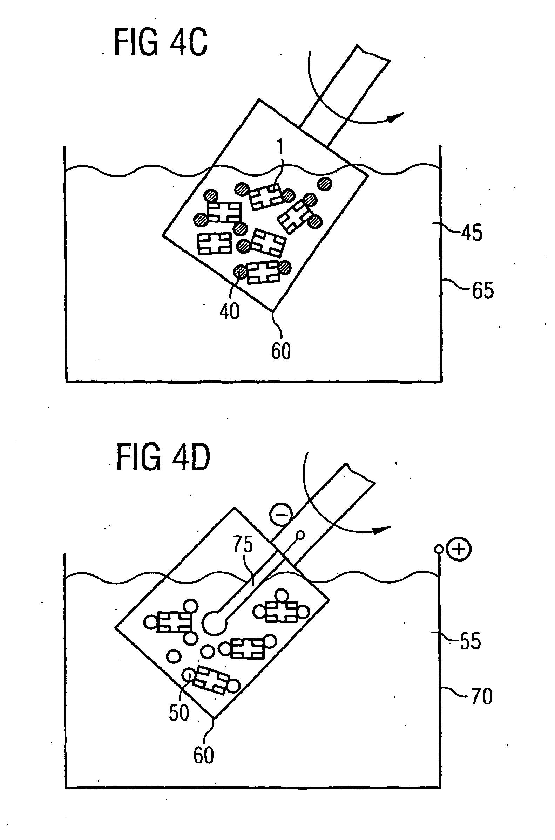

Fig. 4C: Anschließend werden in einem Verfahrensschritt B1) die mit den Kontaktflächen zu versehenden Bereiche des keramischen Grundkörpers durch mechanische und chemische Behandlung aktiviert. In einem abschließenden Verfahrensschritt C1) werden dann die Kontaktflächen direkt durch einen galvanischen Prozeß auf den keramischen Grundkörper im Bereich der chemisch/mechanisch aktivierten Bereiche aufgebracht.

Vorteilhafterweise werden die zu galvanisierenden Bereiche des keramischen Grundkörpers im Verfahrensschritt B1) durch mechanisches Aufrauhen und durch chemisches Ätzen in sauren oder basischen wässrigen Lösungen behandelt. Das Aufrauhen läßt sich beispielsweise dadurch bewerkstelligen, daß auf die zu galvanisierenden Bereiche der Bauelemente Schleifkörper einwirken. Als Schleifkörper lassen sich beispielsweise kleine Kugeln oder auch Würfel verwenden, die aus Siliziumcarbid, Korund oder Stahl bestehen. Der Verfahrensschritt B1) läßt sich vorteilhafterweise durch eine abrollende Bewegung eines Gemenges aus keramischen Bauteilen und Schleifkörpern in einem sauren wässrigen Medium in einer rotierenden Trommel realisieren. Durch das gleichzeitige mechanische Aufrauhen und das chemische Ätzen lassen sich die Oberflächen des keramischen Bauteils zuverlässig so modifizieren, daß eine gute Haftfestigkeit der Kontaktflächen auf dem keramischen Bauelement während des Galvanisierungsprozesses im Verfahrensschritt C1) gewährleistet werden kann.

Fig 4D: Die Galvanisierung im Verfahrensschritt B1) erfolgt vorteilhafterweise im Schüttgut, so daß eine große Anzahl von keramischen Bauelementen in einem Schritt einfach und kostengünstig chemisch und mechanisch vorbehandelt werden kann.

Im Verfahrensschritt C1) wird anschließend auf die im Verfahrensschritt B1) aufgerauhten und geätzten Bereiche des Bauelements galvanisch eine Kontaktfläche abgeschieden. Die Galvanisierung erfolgt dabei vorteilhafterweise ebenso wie beim Verfahrensschritt B1) im Schüttgut, wobei die Bauteile in einer sauren Metallsalzlösung mit Kontaktkörpern vermengt werden. Die Kontaktkörper sind vorteilhafterweise elektrisch leitende Metallkugeln, beispielsweise Stahlkugeln, die die Bauelemente kontaktieren und einen besseren Stromfluß zwischen den Bauelementen gewährleisten, so daß eine höhere Abscheidungsrate des Metalls (Kontaktflächen) auf den Bauelementen erzielt werden kann. In der Regel befindet sich auch hier das Bauelement-Kontaktkörper-Gemenge in einer rotierenden Trommel in einer Elektrolytlösung, wobei die Trommel sich in einem Galvanikbecken befindet. Durch Anlegen eines geeigneten Stromes (Galvanikbecken beispielsweise als Anode geschaltet und eine Kathode, die in die rotierende Trommel eintaucht) läßt sich galvanisch eine Kontaktfläche auf den nach dem Verfahrensschritt B1) vorbehandelten Bereichen der Bauelemente abscheiden.

In Figur 4A ist die Herstellung des keramischen Grundkörpers 1 zu sehen, die ähnlich wie bei dem vorher geschilderten ersten Verfahren erfolgt. Der Grundkörper läßt sich beispielsweise durch Verstapeln von Grünfolien herstellen, wobei zwischen den Grünfolien Elektrodenschichten angeordnet werden können und die oberste und unterste Folie jeweils der zweiten keramischen Schutzschicht bestehen. Im Gegensatz zum ersten geschilderten Verfahren sollten bei diesem Verfahren im Verfahrensschritt A1) allerdings alle nicht zu galvanisierenden Bereiche des keramischen Grundkörpers mit keramischen Schutzschichten bedeckt werden, um diese Bereiche vor der Einwirkung des chemischen Bades und der Schleifkörper im Verfahrensschritt B1) zu schützen. Die erste keramische Schutzschicht, sowie die restlichen keramischen Schutzschichten, die alle nicht zum galvanisierenden Bereiche des Bauelements bedecken, lassen sich beispielsweise wieder mittels eines Druckverfahrens, beispielsweise Siebdruck, aufbringen. In Figur 4B ist ein keramischer Grundkörper mit der ersten und zweiten keramischen Schutzschicht vor dem Sintern gezeigt.

Nach dem Sintern des keramischen Grundkörpers, das beispielsweise für 24 Stunden bei Spitzentemperaturen > 1000°C erfolgt, lassen sich im Verfahrensschritt B1) die zu galvanisierenden Bereiche im Schüttgut mechanisch und chemisch vorbehandeln, wie in Figur 4C gezeigt. Dazu werden die keramischen Bauelemente mit Schleifkörpern 40 in einer sauren, wässrigen Lösung in Kontakt gebracht. Das Gemenge aus Schleifkörpern und keramischen Bauelementen befindet sich in einer rotierenden Trommel 60, die in ein Säurebad 45 in einem Becken 65 eintaucht. Die rotierende Bewegung der Trommel ist durch einen Pfeil in Figur 4C dargestellt. Die Trommeldrehachse ist dabei geneigt, um eine abrollende Bewegung des Gemenges aus keramischen Bauelementen und Schleifkörpern zu gewährleisten. Durch das gleichzeitige mechanische Aufrauhen durch die Schleifkörper 40 und die chemische Ätzung im sauren Bad 45 werden die zu galvanisierenden Bereiche der Bauelemente so modifiziert, daß eine zuverlässige Haftung der in C1) galvanisch aufzubringenden Kontaktflächen möglich wird. Als Säurebad wird beispielsweise eine phosphorsaure, wässrige Lösung mit einem pH-Wert von etwa 1,0 bis 1,5 eingesetzt. Die Größe der Kontaktierungsfläche sowie die Kontaktierungswahrscheinlichkeit zwischen den Schleifkörpern und den Bauelementen, wird dadurch erhöht, daß ein vorteilhaftes Verhältnis von Bauelementlänge zum Schleifkörperdurchmesser eingehalten wird. Dieses beträgt vorteilhafterweise etwa 1 : 0,05 bis 1 : 0,8.

Im Verfahrensschritt C1) werden dann die nach B1) vorbehandelten keramischen Bauelemente ebenfalls im Schüttgut galvanisiert, wie in Figur 4D gezeigt. Dazu bringt man ein Gemenge aus Bauelementen und Kontaktkörpern 50 in eine rotierende Trommel 60. Diese Trommel taucht in eine Elektrolytlösung 55, die sich in einem Galvanikbecken 70 befindet. Die Elektrolytlösung besteht beispielsweise aus einer Zinnsalzlösung mit einer ungefähren Konzentration von 10 bis 20 g SnII je Liter, wobei der pH-Wert ungefähr 3 bis 4,5 beträgt. Als Kontaktkörper werden vorzugsweise elektrisch leitende Kugeln, beispielsweise Stahlkugeln eingesetzt. Um eine galvanische Abscheidung von metallischen Kontaktflächen auf die zu galvanisierenden Bereiche der Bauelemente zu ermöglichen, wird das Galvanikbecken 70 als Anode geschaltet und gleichzeitig eine Elektrode 75 in die rotierende Trommel 60 eingetaucht, die als Kathode geschaltet ist. Die abrollende Bewegung der Trommel 60 ermöglicht einen guten Kontakt zwischen den Bauelementen und den Kontaktkörpern, wobei bei diesem Verfahren vorzugsweise ein Verhältnis von Bauteillänge zu Kontaktkörperdurchmesser im Bereich von etwa 1 : 0,05 bis 1 : 0,08 eingehalten wird. Dadurch erhöht sich die Kontaktwahrscheinlichkeit zwischen den Kontaktkörpern und den Bauelemente, so daß aufgrund des guten Stromflusses eine gute Abscheidung des Metalls auf den zu galvanisierenden Bereichen möglich ist. Die Stromdichten liegen dabei vorzugsweise im Bereich von etwa 0,05 bis 0,15 A/dm$^2$.

Vorzugsweise werden die in C1) verwendeten Kontaktkörper auch gleichzeitig als Schleifkörper im Verfahrensschritt B1) eingesetzt. Dies ermöglicht einen einfachen und kontinuierlichen Verfahrensprozess, bei dem nach dem Verfahrensschritt B1) die rotierende Trommel aus dem sauren Bad 45 entfernt wird, einige Male mit Wasser gewaschen wird, um keine Kontaminationen des sauren Bades auf den Bauelementen oder Kontakt- beziehungsweise Schleifkörpern in den Verfahrensschritt C1) zu überführen. Nach dem Waschen kann das Bauelement-Kontaktkörper-Gemenge direkt in das Galvanisierungsbad mit der Elektrolytlösung 55 eingetaucht werden und der Verfahrensschritt C1) durchgeführt werden. Dadurch können zusätzliche aufwendige Arbeitsschritte, wie zum Beispiel das Entfernen der Schleifkörper beim Übergang von den Verfahrensschritten B1) nach C1) vermieden werden.

Die Vorteile dieses Verfahrens bestehen auch darin, daß sowohl die Vorbehandlung der zu galvanisierenden Bereiche in Verfahrensschritt B1) als auch der Verfahrensschritt C1) mit den gleichen für die Galvanisierung vorgesehenen technischen Einrichtungen vorgenommen werden kann.

Das erfindungsgemäße Bauelement beschränkt sich nicht auf die hier vorgestellten Ausführungsbeispiele. Weitere Variationen sind sowohl hinsichtlich der Anzahl der Kontaktflächen, als auch der Beschaffenheit der ersten und zweiten keramischen Schutzschicht, sowie hinsichtlich der Herstellungsverfahren des erfindungsgemäßen Bauelements im Rahmen der nachstehenden Patentansprüche möglich.

**Patentansprüche**

1. Elektrisches Bauelement,

   - mit einem die Funktion des Bauelements definierenden keramischen Grundkörper (1),
   - mit wenigstens vier gesinterten Kontaktflächen (5), wobei jeweils zwei Kontaktflächen auf sich gegenüberliegenden Flächen (10 A und 10B) des keramischen Grundkörpers (1) angeordnet sind,
   - mit einer ersten gesinterten keramischen Schutzschicht (15) auf den von den Kontaktflächen (5) freien Bereichen der genannten sich gegenüber liegenden Flächen (10A und 10B), wobei die erste Schutzschicht (15) bei einer höheren Temperatur sinterbar ist als die Kontaktflächen (5),
   - mit einer zweiten gesinterten keramischen Schutzschicht (20) auf zumindest zwei weiteren sich jeweils gegenüberliegenden Flächen (25A und 25B) des keramischen Grundkörpers, wobei der keramische Grundkörper (1) und die erste (15) und zweite (20) keramische Schutzschicht gemeinsam sinterbar sind.

2. Bauelement nach dem vorherigen Anspruch,

   - bei der die zweite keramische Schutzschicht (20) auf allen vier von den Kontaktflächen (5) und der ersten keramischen Schutzschicht (15) freien Flächen (25A, 25B, 26A und 26B) des keramischen Grundkörpers (1) angeordnet ist.

3. Bauelement nach einem der vorherigen Ansprüche,

   - bei dem im keramischen Grundkörper (1) elektrisch leitende Elektrodenschichten (30) angeordnet sind, die durch Bereiche (35) des keramischen Grundkörpers voneinander abgetrennt sind,
   - bei dem jeweils eine der Kontaktflächen (5) mit mehreren Elektrodenschichten (30) elektrisch leitend verbunden ist und ein Elektrodenbündel bildet.

4. Bauelement nach einem der vorherigen Ansprüche,

   - bei dem die erste (15) und zweite (20) keramische Schutzschicht aus dem gleichen Keramikmaterial ausgebildet sind.

5. Bauelement nach einem der vorherigen Ansprüche,

   - bei dem der keramische Grundkörper (1) eine Varistorkeramik, eine Kondensatorkeramik oder eine magnetische Keramik umfaßt.

6. Bauelement nach einem der vorherigen Ansprüche,

   - bei dem die erste (15) und/oder zweite (20) keramische Schutzschicht hochohmig ist.

7. Bauelement nach einem der vorherigen Ansprüche,

   - bei dem die erste (15) und/oder zweite (20) keramische Schutzschicht eine Spinell-Keramik der Zusammensetzung $AB_2O_4$ umfaßt, wobei A ein zwei- und B ein drei- oder vierwertiges Metall ist, oder ein Perowskit der folgenden allgemeinen Formel ist

   $$M^{II}_xM^{III}_{1-x}Ti^{IV}_{x+y}Co^{II}_yCo^{III}_{1-x-2y}O_3,$$

   bei dem das zweiwertige Metall MII entweder Strontium oder Barium und das dreiwertige Metall MIII ein Element der seltenen Erden ist, bei dem gilt:

   $$0 \leq x < 0,85;\ 0 < y < (1-x)/2 \text{ und } x+y \leq 1.$$

8. Bauelement nach einem der Ansprüche 1 bis 6,

**EP 1 430 489 B1**

- bei dem die erste (15) und/oder zweite (20) keramische Schutzschicht eine Blei-Lanthan-Zirkon-Titanat-Keramik $(Pb,La)(Zr,Ti)O_3$ umfaßt.

9. Verfahren zur Herstellung eines Bauelements mit mehreren Kontaktflächen mit den Verfahrensschritten,

A) auf sich gegenüberliegenden Flächen (10A und 10B) eines keramischen Grundkörpers (1), auf denen die Kontaktflächen (5) angeordnet werden sollen, wird eine erste keramische Schutzschicht (15) auf den nicht mit den Kontaktflächen zu bedeckenden Bereichen erzeugt und auf zumindest zwei weiteren sich gegenüberliegenden Flächen (25A und 25B) des keramischen Grundkörpers eine zweite keramische Schutzschicht aufgebracht und anschließend der keramische Grundkörper mit der ersten und zweiten keramischen Schutzschicht gesintert,
B) die Kontaktflächen (5) werden anschließend auf dem keramischen Grundkörper erzeugt und bei einer niedrigeren Temperatur als im Verfahrensschritt A) gesintert.

10. Verfahren nach dem vorherigen Anspruch,

- bei dem im Verfahrensschritt A) der keramische Grundkörper (1) durch Verstapeln von keramischen Grünfolien aufgebaut wird, wobei die oberste und unterste Grünfolie die zweite keramische Schutzschicht (20) umfaßt und anschließend die erste keramische Schutzschicht (15) auf den keramischen Grundkörper aufgebracht wird.

11. Verfahren nach einem der Ansprüche 9 oder 10,

- bei dem im Verfahrensschritt A) die erste keramische Schutzschicht mittels eines Druckverfahrens aufgebracht wird.

12. Verfahren nach einem der Ansprüche 10 bis 11,

- bei dem im Verfahrensschritt A) elektrisch leitende Elektrodenschichten zwischen den keramischen Grünfolien angeordnet werden.

13. Verfahren nach dem vorherigen Anspruch,

- bei dem die elektrisch leitenden Elektrodenschichten mittels eines Druckverfahrens auf die keramischen Grünfolien aufgebracht werden.

14. Verfahren nach einem der Ansprüche 9 bis 13,

- bei dem im Verfahrensschritt B) die Kontaktflächen in Form einer Leitpaste oder eines Leitklebers auf den keramischen Grundkörper aufgebracht werden.

15. Verfahren zur Herstellung eines Bauelements mit mehreren Kontaktflächen mit den Verfahrensschritten,

A1) auf sich gegenüberliegenden Flächen (10A und 10B) eines keramischen Grundkörpers (1), auf denen die Kontaktflächen (5) angeordnet werden sollen, wird eine erste keramische Schutzschicht (15) auf den nicht mit den Kontaktflächen zu bedeckenden Bereichen erzeugt und auf allen vier weiteren sich gegenüberliegenden Flächen (25A, 25B, 26A und 26B) des keramischen Grundkörpers eine zweite keramische Schutzschicht (20) aufgebracht und anschließend der keramische Grundkörper (1) mit der ersten und zweiten keramischen Schutzschicht gesintert,
B1) anschließend werden die mit den Kontaktflächen (5) zu bedeckenden Bereiche des keramischen Grundkörpers durch mechanische und chemische Behandlung aktiviert,
C1) die Kontaktflächen (5) werden danach durch einen galvanischen Prozeß auf den keramischen Grundkörper (1) aufgebracht.

16. Verfahren nach dem vorhergehenden Anspruch,

- bei dem im Verfahrensschritt B1) die mechanische Behandlung durch Aufrauhen und die chemische Behandlung durch Ätzen der zu galvanisierenden Bereiche des keramischen Grundkörpers erfolgt.

8

**17.** Verfahren nach dem vorhergehenden Anspruch,

- bei dem im Verfahrensschritt B1) Schleifkörper (40) verwendet werden, die in sauren oder basischen wässrigen Lösungen (45) mechanisch auf den keramischen Grundkörper (1) einwirken.

**18.** Verfahren nach einem der Ansprüche 15 bis 17,

- bei dem im Verfahrensschritt C1) der keramische Grundkörper mit elektrisch leitenden Kontaktkörpern (50) in einer ein Metallsalz umfassenden Elektrolytlösung (55) in Kontakt gebracht wird und ein elektrischer Stromfluß mit einer geeigneten Stromdichte so angelegt wird, daß eine galvanische Abscheidung des Metalls auf den zu galvanisierenden Bereichen des keramischen Grundkörpers erfolgt.

**19.** Verfahren nach dem vorhergehenden Anspruch,

- bei dem der keramische Grundkörper derart mit den Kontaktkörpern in Kontakt gebracht wird, daß der keramische Grundkörper und die Kontaktkörper eine Relativbewegung zueinander ausführen.

**20.** Verfahren nach einem der Ansprüche 18 und 19,

- bei dem die im Verfahrensschritt C1) eingesetzten Kontaktkörper (50) auch im Verfahrensschritt B1) als Schleifkörper (40) verwendet werden.

**Claims**

**1.** Electric component,

- comprising a ceramic base body (1) defining the function of the component,
- comprising at least four sintered contact surfaces (5), arranged two each on opposite surfaces (10A and 10B) of the ceramic base body (1),
- comprising a first sintered ceramic protective layer (15) on the regions of the said opposite surfaces (10A and 10B) that are free from the contact surfaces (5), wherein the first protective layer (15) can be sintered at a higher temperature than the contact surfaces (5),
- comprising a second sintered ceramic protective layer (20) on at least two further respectively opposite surfaces (25A and 25B) of the ceramic base body, wherein the ceramic base body (1) and the first (15) and second (20) ceramic protective layers can be sintered together with one another.

**2.** Component according to the preceding claim,

- in which the second ceramic protective layer (20) is arranged on all four of the surfaces (25A, 25B, 26A and 26B) of the ceramic base body (1) that are free from the contact surfaces (5) and the first ceramic protective layer (15).

**3.** Component according to one of the preceding claims,

- in which electrically conducting electrode layers (30), which are separated from one another by regions (35) of the ceramic base body, are arranged in the ceramic base body (1),
- in which one of the contact surfaces (5) in each case is connected in an electrically conducting manner to a number of electrode layers (30) and forms an electrode bundle.

**4.** Component according to one of the preceding claims,

- in which the first (15) and second (20) ceramic protective layers are formed from the same ceramic material.

**5.** Component according to one of the preceding claims,

- in which the ceramic base body (1) comprises a varistor ceramic, a capacitor ceramic or a magnetic ceramic.

**6.** Component according to one of the preceding claims,

  - in which the first (15) and/or second (20) ceramic protective layer is of high impedance.

**7.** Component according to one of the preceding claims,

  - in which the first (15) and/or second (20) ceramic protective layer comprises a spinel ceramic of the composition $AB_2O_4$, where A is a bivalent metal and B is a trivalent or quadrivalent metal, or is a perovskite of the following general formula

$$M^{II}_x M^{III}_{1-x} Ti^{IV}_{x+y} Co^{II}_y Co^{III}_{1-x-2y} O_3,$$

  in which the bivalent metal MII is either strontium or barium and the trivalent metal MIII is an element of the rare earths, for which:

$$0 \leq x < 0,85; \quad 0 < y < (1-x)/2 \quad \text{and} \quad x+y \leq 1.$$

**8.** Component according to one of Claims 1 to 6,

  - in which the first (15) and/or second (20) ceramic protective layer comprises a leadlanthanum-zirconium-titanate ceramic (Pb, La) (Zr, Ti)$O_3$.

**9.** Method for producing a component comprising a plurality of contact surfaces by the following method steps:

  A) on opposite surfaces (10A and 10B) of a ceramic base body (1), on which the contact surfaces (5) are to be arranged, a first ceramic protective layer (15) is created on the regions that are not to be covered with the contact surfaces and a second ceramic protective layer is applied on at least two further opposite surfaces (25A and 25B) of the ceramic base body, and subsequently the ceramic base body is sintered with the first and second ceramic protective layers,
  B) the contact surfaces (5) are subsequently created on the ceramic base body and sintered at a lower temperature than in method step A).

**10.** Method according to the preceding claim,

  - in which, in method step A), the ceramic base body (1) is built up by stacking green ceramic sheets, wherein the uppermost and lowermost green sheets comprise the second ceramic protective layer (20), and subsequently the first ceramic protective layer (15) is applied to the ceramic base body.

**11.** Method according to either of Claims 9 and 10,

  - in which, in method step A), the first ceramic protective layer is applied by means of a printing process.

**12.** Method according to either of Claims 10 and 11,

  - in which, in method step A), electrically conducting electrode layers are arranged between the green ceramic sheets.

**13.** Method according to the preceding claim,

  - in which the electrically conducting electrode layers are applied to the green ceramic sheets by means of a printing process.

**14.** Method according to one of Claims 9 to 13,

  - in which, in method step B), the contact surfaces are applied to the ceramic base body in the form of a conductive paste or a conductive adhesive.

15. Method for producing a component comprising a plurality of contact surfaces by the following method steps:

A1) on opposite surfaces (10A and 10B) of a ceramic base body (1), on which the contact surfaces (5) are to be arranged, a first ceramic protective layer (15) is created on the regions that are not to be covered with the contact surfaces and a second ceramic protective layer (20) is applied on all four further opposite surfaces (25A, 25B, 26A and 26B) of the ceramic base body, and subsequently the ceramic base body (1) is sintered with the first and second ceramic protective layers,

B1) subsequently, the regions of the ceramic base body that are to be covered with the contact surfaces (5) are activated by mechanical and chemical treatment,

C1) after that, the contact surfaces (5) are applied to the ceramic base body (1) by an electroplating process.

16. Method according to the preceding claim,

- in which, in method step B1), the mechanical treatment takes place by roughening and the chemical treatment takes place by etching the regions of the ceramic base body that are to be electroplated.

17. Method according to the preceding claim,

- in which abrasive media (40) are used in method step B1), acting mechanically on the ceramic base body (1) while in acidic or basic aqueous solutions (45).

18. Method according to one of Claims 15 to 17,

- in which, in method step C1), the ceramic base body is brought into contact with electrically conducting contact bodies (50) in an electrolyte solution (55) comprising a salt of a metal, and an electric current flow with a suitable current density is applied such that an electrodeposition of metal takes place on the regions of the ceramic base body that are to be electroplated.

19. Method according to the preceding claim,

- in which the ceramic base body is brought into contact with the contact bodies in such a way that the ceramic base body and the contact bodies perform a relative movement with respect to each other.

20. Method according to either of Claims 18 and 19,

- in which the contact bodies (50) used in method step C1) are also used as abrasive media (40) in method step B1).

**Revendications**

1. Composant électrique,

- comprenant un corps (1) de base en céramique définissant la fonction du composant,
- comprenant au moins quatre surfaces (5) de contact frittées, respectivement deux surfaces de contact étant disposées sur des surfaces (10A et 10B) opposées du corps (1) de base en céramique,
- comprenant une première couche (15) de protection en céramique frittée sur les zones desdites surfaces (10A et 10B) opposées qui sont exemptes de surface (5) de contact, la première couche (15) de protection pouvant être frittée à une température plus haute que les surfaces (5) de contact,
- comprenant une deuxième couche (20) de protection en céramique frittée sur au moins deux autres surfaces (25A et 25B) respectivement opposées du corps de base en céramique, le corps (1) de base en céramique et la première (15) et la deuxième (20) couches de protection en céramique pouvant être frittés conjointement.

2. Composant suivant la revendication précédente,

- dans lequel la deuxième couche (20) de protection en céramique est disposée sur toutes les quatre surfaces (25A, 25B, 26A et 26B) du corps (1) de base en céramique exemptes des surfaces (5) de contact et de la première couche (15) de protection en céramique.

**3.** Composant suivant l'une des revendications précédentes,

- dans lequel, dans le corps (1) de base en céramique, sont disposées des couches (30) d'électrode conductrices de l'électricité, qui sont séparées les unes des autres par des parties (35) du corps de base en céramique,
- dans lequel respectivement l'une des surfaces (5) de contact est reliée, d'une manière conductrice de l'électricité, à plusieurs couches (30) d'électrode et forme un faisceau d'électrodes.

**4.** Composant suivant l'une des revendications précédentes,

- dans lequel la première (15) et la deuxième (20) couches de protection en céramique sont en le même matériau en céramique.

**5.** Composant suivant l'une des revendications précédentes,

- dans lequel le corps (1) de base en céramique comprend une céramique pour varistance, une céramique pour condensateur ou une céramique magnétique.

**6.** Composant suivant l'une des revendications précédentes,

- dans lequel la première (15) et/ou la deuxième (20) couche de protection en céramique est à grande valeur ohmique.

**7.** Composant suivant l'une des revendications précédentes,

- dans lequel la première (15) et/ou la deuxième (20) couche de protection en céramique comprend une céramique de spinelle de composition $AB_2O_4$, A étant un métal bivalent et B un métal bivalent ou tétravalent ou un perovskite de formule générale suivante :.

$$M^{II}_x M^{III}_{1-x} Ti^{IV}_{x+y} Co^{II}_y Co^{III}_{1-x-2y} O_3$$

dans laquelle le métal MII bivalent est le strontium ou le baryum, le métal MIII trivalent est un élément des terres rares, pour lequel on a :

$$0 \leq x < 0,85 \; ; \; 0 < y < (1-x)/2 \text{ et } x+y \leq 1.$$

**8.** Composant suivant l'une des revendications 1 à 6,

- dans lequel la première (15) et/ou la deuxième (20) couche de protection en céramique comprend une céramique en titanate de plomb de lanthane et de zirconium (Pb, La) (Zr, Ti) $O_3$.

**9.** Procédé de production d'un composant, ayant plusieurs surfaces de contact comprenant les stades de procédé dans lesquels :

A) on produit, sur des surfaces (10A et 10B) opposées du corps (1) de base en céramique sur lesquelles on doit disposer les surfaces (5) de contact, une première couche (15) de protection en céramique sur les parties qui ne doivent pas être recouvertes des surfaces de contact et on dépose, sur au moins deux autres surfaces (25A et 25B) opposées du corps de base en céramique, une deuxième couche de protection en céramique et ensuite on fritte le corps de base en céramique avec la première et la deuxième couches de protection en céramique,
B) on produit les surfaces (5) de contact ensuite sur le corps de base en céramique et on fritte à une température plus basse que dans le premier stade A) du procédé.

**10.** Procédé suivant la revendication précédente,

- dans lequel, dans le stade A) du procédé, on forme le corps (1) de base en céramique en empilant des feuilles en céramique crues, la feuille crue la plus haute et la plus basse comprenant la deuxième couche (20) de protection en céramique, et on dépose ensuite la première couche (15) de protection en céramique sur le corps de base en céramique.

**11.** Procédé suivant la revendication 9 ou 10,

- dans lequel, dans le stade A) du procédé, on dépose la première couche de protection en céramique au moyen d'un procédé d'impression.

**12.** Procédé suivant l'une des revendications 10 à 11,

- dans lequel, dans le stade A) du procédé, on met des couches d'électrode, conductrices de l'électricité, entre les feuilles en céramique crues.

**13.** Procédé suivant la revendication précédente,

- dans lequel on dépose les couches d'électrodes conductrices d'électricité au moyen d'un procédé d'impression sur les feuilles en céramique crues.

**14.** Procédé suivant l'une des revendications 9 à 13,

- dans lequel, dans le stade B) du procédé, on dépose les surfaces de contact sous la forme d'une pâte conductrice ou d'une colle conductrice sur le corps de base en céramique.

**15.** Procédé de production d'un composant ayant plusieurs surfaces de contact par les stades de procédé :

A1) on produit, sur des surfaces (10A et 10B) opposées d'un corps (1) de base en céramique sur lesquelles on doit mettre des surfaces (5) de contact, une première couche (15) de protection en céramique sur les parties qui ne doivent pas être recouvertes des surfaces de contact et on dépose, sur au moins toutes les quatre autres surfaces (25A, 25B, 26A et 26B) opposées du corps de base en céramique, une deuxième couche (20) de protection en céramique et ensuite on fritte le corps de base en céramique avec la première et la deuxième couches de protection en céramique,
B1) on active ensuite les parties du corps de base en céramique qui ne doivent pas être recouvertes des surfaces (5) de contact par un traitement mécanique et chimique,
C1) on dépose des surfaces (5) de contact ensuite par un processus galvanique sur le corps (1) de base en céramique.

**16.** Procédé suivant la revendication précédente,

- dans lequel, dans le stade B1) du procédé, on effectue le traitement mécanique par un traitement donnant de la rugosité et le traitement chimique par attaque des parties à galvaniser du corps de base en céramique.

**17.** Procédé suivant la revendication précédente,

- dans lequel, dans le stade B1) du procédé, on utilise des corps (21) abrasifs qui agissent en solution (45) aqueuse acide ou basique sur le corps (1) de base en céramique.

**18.** Procédé suivant l'une des revendications 15 à 17,

- dans lequel, dans le stade C1) du procédé, on met le corps (1) de base en céramique en contact avec des corps (50) de contact conducteurs de l'électricité dans une solution (55) d'électrolyse comprenant un sel de métal et on applique un flux électrique de courant ayant une densité de courant appropriée de façon à effectuer un dépôt galvanique du métal sur les parties du corps de base en céramique à galvaniser.

**19.** Procédé suivant la revendication précédente,

- dans lequel on met le corps de base en céramique en contact avec les corps de contact de façon à ce que le corps de base en céramique et les corps de contact exécutent un mouvement relatif l'un par rapport aux autres.

**20.** Procédé suivant l'une des revendications 18 et 19,

- dans lequel on utilise les corps (50) de contact utilisés dans le stade C1) du procédé, également dans le stade B1) du procédé comme corps (40) abrasifs.

## FIG 1

## FIG 2A

## FIG 2B

## FIG 2C

# FIG 3A

# FIG 3B

# FIG 3C

# FIG 3D

# FIG 4A

# FIG 4B

## FIG 4C

## FIG 4D

## IN DER BESCHREIBUNG AUFGEFÜHRTE DOKUMENTE

### In der Beschreibung aufgeführte Patentdokumente

- US 6159768 A
- DE 19634498 C2
- DE 19946196
- WO 02071825 A